(19) Europäisches Patentamt
European Patent Office
Office européen des brevets

(11) **EP 1 005 822 B1**

(12) **FASCICULE DE BREVET EUROPEEN**

(45) Date de publication et mention
de la délivrance du brevet:
**04.08.2004 Bulletin 2004/32**

(51) Int Cl.7: **A47J 36/02**, C22C 19/03,
H05B 6/12

(21) Numéro de dépôt: **99402924.7**

(22) Date de dépôt: **25.11.1999**

(54) **Récipient culinaire pour chauffage par induction et alliage pour réalisér un tel récipient**

Induktionsgeheiztes Kochgefäss und Legierung zur Herstellung eines solchen Gefässes

Induction heated cooking vessel and alloy for preparing such a vessel

(84) Etats contractants désignés:
**AT BE CH CY DE DK ES FI FR GB GR IE IT LI LU MC NL PT SE**

(30) Priorité: **01.12.1998 FR 9815105**

(43) Date de publication de la demande:
**07.06.2000 Bulletin 2000/23**

(73) Titulaire: **Imphy Alloys**
**92800 Puteaux (FR)**

(72) Inventeurs:
• **Chaput, Laurent**
**58160 Sauvigny lès Bois (FR)**
• **Coutu, Lucien**
**58160 Sauvigny lès Bois (FR)**
• **Leroy, Marc**
**92160 Antony (FR)**
• **Grosbety, Yves**
**93160 Noisy le Grand (FR)**

(74) Mandataire: **Ventavoli, Roger**
**USINOR,**
**Direction Propriété Industrielle,**
**Immeuble "La Pacific",**
**La Défense,**
**11/13 Cours Valmy,**
**TSA 10001**
**92070 La Défense (FR)**

(56) Documents cités:
FR-A- 2 453 627          FR-A- 2 527 916
FR-A- 2 689 748

• **PATENT ABSTRACTS OF JAPAN vol. 015, no. 114 (E-1047), 19 mars 1991 (1991-03-19) & JP 03 004479 A (SONY CORP), 10 janvier 1991 (1991-01-10)**
• **CHEMICAL ABSTRACTS, vol. 115, no. 16, 21 octobre 1991 (1991-10-21) Columbus, Ohio, US; abstract no. 163973, XIE, YUANPU: "Thermal-spray coating of stainless steel pot bottom with copper alloy" XP002109861 & CN 1 046 296 A (WUYI UNIVERSITY, PEOP. REP. CHINA) 24 octobre 1990 (1990-10-24)**
• **S.R.LAMPMAN ET AL: "METALS HANDBOOK, VOL.2" 1990 , ASM INTERNATIONAL , METALS PARK, OHIO, US XP002109860 * page 435 - page 437 ***

## Description

La présente invention est relative à un récipient culinaire destiné à être chauffé par induction.

Les récipients culinaires, tels que notamment les casseroles, les faitouts ou les poêles sont en général réalisés en alliage compatible avec les aliments, tels qu'un acier inoxydable austénitique ou un alliage d'aluminium. Lorsqu'ils sont destinés à être chauffés par induction, ces récipients culinaires comportent, dans la partie externe de leur fond, un insert en alliage ferromagnétique. En effet, les alliages compatibles avec les aliments sont en général amagnétiques et, de ce fait, ne peuvent être chauffés par induction, compte tenu de la plage de fréquence généralement autorisée (20 à 50 KiloHertz). En revanche, l'insert en alliage ferromagnétique peut être chauffé par induction, et constitue une partie chauffante. Divers modes de réalisation existent. Par exemple, lorsque le récipient est en alliage d'aluminium, la partie chauffante peut être une grille insérée dans le fond du récipient. Lorsque le récipient est en acier inoxydable austénitique, la partie chauffante est une plaque en alliage ferromagnétique disposée sur la paroi externe du fond et, soit séparée de la paroi par une couche d'aluminium destinée à bien répartir la chaleur, soit accolée au fond et recouverte sur sa face externe par une couche d'acier inoxydable austénitique destinée à assurer une bonne résistance à la corrosion.

En général, le matériau ferromagnétique utilisé pour la partie chauffante est un acier inoxydable ferritique. Cette technique présente l'inconvénient de permettre un chauffage par induction jusqu'à des températures pouvant atteindre 600 °C lorsqu'on laisse le récipient sur le dispositif de chauffage par induction. Il en résulte que les aliments peuvent être brûlés et les récipients détériorés.

Afin de remédier à cet inconvénient, il a été proposé notamment dans les demandes de brevet français N° 2 527 916, N° 2 453 627 et N° 2 689 748, d'utiliser des parties chauffantes en alliage ferromagnétique ayant une température de Curie pas trop élevée, par exemple, comprises entre 60 °C et 350 °C, afin d'éviter les surchauffes. L'intérêt d'une partie chauffante en alliage ferromagnétique dont la température de Curie n'est pas trop élevée, est que, lorsque la température de l'élément chauffant devient proche de la température de Curie de l'alliage, la partie chauffante devient progressivement amagnétique, ce qui arrête le chauffage. Il en résulte un effet thermostatique qui a pour conséquence que la température du fond du récipient culinaire ne peut pas dépasser la température de Curie de l'alliage dont est constituée la partie chauffante. On peut noter que les demandes de brevet citées ci-dessus soit ne donnent que des indications très vagues sur les alliages utilisables, soit proposent d'utiliser des alliages qui ne sont pas adaptés à l'usage envisagé. Par exemple, dans la demande de brevet français 2 689 748 il est proposé d'utiliser soit du FeNi36, soit du FeNi18Co9Mo5, soit du FeNi80Mo5. Aucune de ces solutions n'est satisfaisante.

L'alliage FeNi36 est bien connu. C'est un alliage à très faible coefficient de dilatation thermique incompatible avec le coefficient de dilatation thermique d'un acier inoxydable austénitique ou d'un alliage d'aluminium. Il résulterait de l'utilisation de cet alliage un effet bilame très important conduisant soit à une déformation du fond du récipient culinaire, soit à un décollement de l'élément chauffant. De plus, cet alliage n'est pas inoxydable.

L'alliage FeNi18Co9Mo5 est un acier maraging bien connu mais qui n'a absolument pas les propriétés requises. Son choix résulte probablement d'une confusion entre la température de Curie et le point Ms de transformation martensitique.

L'alliage FeNi80Mo5 également bien connu n'est pas non plus adapté puisque sa température de Curie est d'environ 450°C.

Par ailleurs, les récipients culinaires destinés au chauffage par induction présentent en outre l'inconvénient de produire un sifflement désagréable, lorsqu'ils sont chauffés.

Le but de la présente invention est de proposer un moyen pour réaliser un récipient culinaire destiné à être chauffé par induction qui puisse être laissé sur un appareil de chauffage par induction sans risque de surchauffe et dont le chauffage par induction n'engendre pas de bruit.

A cet effet, l'invention a pour objet un récipient culinaire destiné à être chauffé par induction comportant une partie chauffante en alliage ferromagnétique ayant une température de Curie comprise entre 150 °C et 370 °C, et de préférence inférieure à 350°C, et un coefficient de magnétostriction $\lambda_s \leq 5 \times 10^{-6}$ en valeur absolue. De préférence, l'alliage a une température de Curie comprise entre 275 °C et 340 °C, et mieux entre 275°C et 325°C, et un coefficient de magnétostriction $\lambda_s \leq 3 \times 10^{-6}$ en valeur absolue.

L'alliage ferromagnétique dont est constituée la partie chauffante est, par exemple, un alliage du type FeNiCuX, X étant un ou plusieurs éléments pris parmi Cr, Mo, Mn, Si, Al, W, Nb, V et Ti, la composition chimique de l'alliage (en % en poids) étant telle que :

$$50 \% \leq Ni \leq 85 \%$$

$$0 \% \leq Cu \leq 50 \%$$

$$0 \% \leq X \leq 12 \%$$

$$(35/25) \times (75 - Ni) \leq Cu \leq (50/35) \times (85 - Ni)$$

$$(7/20) \times (Ni - 65) \leq X \leq (12/35) \times (Ni - 50)$$

avec :

$$X = Cr + Mo + Mn + Si + Al + W + Nb + V + Ti,$$

le reste étant du fer et des impuretés résultant de l'élaboration.

De préférence, la composition chimique de cet alliage est telle que :

$$55\ \% < Ni < 65\ \%$$

$$22\ \% \leq Cu \leq 36\ \%$$

$$0\ \% \leq X \leq 3\ \%$$

Et mieux encore, la teneur en cuivre est comprise entre 25% et 35%.

La partie chauffante peut être constituée d'un insert incorporé au fond du récipient qui peut être, notamment, une plaque.

La partie chauffante peut également constituer la paroi du récipient et être recouverte au moins sur sa partie interne d'une couche d'émail.

L'invention concerne également l'alliage dont est constituée la partie chauffante.

L'invention va maintenant être décrite de façon non limitative et illustrée par des exemples.

Les inventeurs ont constaté qu'avec un récipient culinaire tel qu'une casserole dont la paroi est en alliage ferromagnétique dont la température de Curie est voisine de 150 °C, il est possible de chauffer par induction de l'eau jusqu'à 100 °C environ. Lorsque la température de Curie est de l'ordre de 300 °C à 350 °C, il est possible de chauffer efficacement de l'huile jusqu'environ 200 °C, sans que la température s'élève jusqu'à des valeurs excessives. La température de Curie peut être supérieure à 350°C, mais il est préférable qu'elle reste inférieure à 370°C.

Les inventeurs ont également constaté, de façon nouvelle, que, lorsque l'alliage ferromagnétique a un coefficient de magnétostriction $\lambda_s$ faible, c'est à dire dont la valeur absolue est inférieure à $5 \times 10^{-6}$ et de préférence inférieure à $3 \times 10^{-6}$, le chauffage par induction n'engendre pas le bruit désagréable associé habituellement au chauffage par induction.

Enfin, les inventeurs ont constaté de façon nouvelle qu'un alliage ayant la composition chimique suivante (en % en poids) :

$$50\ \% < Ni < 85\ \%$$

$$0\% < Cu \leq 50\%$$

$$0\ \% \leq X \leq 12\ \%$$

$$(35/25) \times (75 - Ni) \leq Cu \leq (50/35) \times (85 - Ni)$$

$$(7/20) \times (Ni - 65) \leq X \leq (12/35) \times (Ni - 50)$$

avec :

$$X = Cr + Mo + Mn + Si + Al + W + Nb + V + Ti,$$

le reste étant du fer et des impuretés résultant de l'élaboration, est ferromagnétique, a une température de Curie comprise entre 150 °C et 370 °C, un coefficient de magnétostriction $\lambda_s$ faible (dont la valeur absolue peut être inférieure à $5 \times 10^{-6}$), et un coefficient de dilatation thermique compatible, par exemple, avec celui d'un acier inoxydable. En ajustant la composition chimique à l'intérieur du domaine défini ci-dessus, il est possible d'ajuster simultanément la température de Curie pour qu'elle soit comprise entre 250 °C et 300 °C ou voisine de 300°C, ce qui permet d'obtenir un récipient adapté aussi bien au chauffage de l'eau qu'à celui de l'huile, et le coefficient de magnétostriction pour que sa valeur absolue soit inférieure à $3 \times 10^{-6}$, ce qui est favorable à la réduction du bruit. De préférence, la teneur en nickel doit être comprise entre 55 % et 65 %, la teneur en cuivre doit être comprise entre 22 % et 36 %, et mieux entre 25% et 36%, et X doit être compris entre 0 % et 3 %.

Le fer, le nickel et le cuivre, dans le domaine de composition défini ci-dessus, permettent d'obtenir un alliage ferromagnétique ayant un coefficient de magnétostriction très faible.

Les éléments complémentaires (Cr, Mo, Mn, Si, Al, W, Nb, V, Ti) permettent d'ajuster la température de Curie sans augmenter la valeur absolue du coefficient de magnétostriction. Par ailleurs, ces éléments permettent d'ajuster d'autres propriétés de l'alliage, telles que, notamment, la résistance à la corrosion, la résistance mécanique, l'aptitude à la mise en forme par déformation plastique à chaud ou à froid. Les teneurs en manganèse et silicium notamment, bien que pouvant êtres nulles, sont en général supérieures à 0,1 % du fait des conditions d'élaboration.

On notera que les limites de composition pour le cuivre, le nickel et les autres éléments, conduisent également au fait que la composition doit également satisfaire aux relations :

$$25 \times Cu + 100 \times X \geq 350$$

et

$$12 \times Cu + 50 \times X \leq 600$$

Plus précisément, pour obtenir un coefficient de magnétostriction quasi nul et une température de Curie voisine de 300 °C, il est préférable que la composition de l'alliage satisfasse à peu près aux relations suivantes :

$$Ni = 80 - (35/50) \times Cu$$

et,

$$100 \times X = (Ni - 50)^2$$

Dans un premier mode de réalisation, une casserole est obtenue par emboutissage d'un flan en alliage ferromagnétique ayant une température de Curie comprise entre 150°C et 370°C et un coefficient de magnétostriction $\lambda_s \leq 5\times10^{-6}$ en valeur absolue, et de préférence, la température de Curie est comprise entre 275 °C et 340°C, et par exemple inférieure à 325°C, et le coefficient de magnétostriction $\lambda_s$ est inférieur ou égal à $3\times10^{-6}$ en valeur absolue. L'alliage ferromagnétique est, par exemple, un alliage tel que défini ci dessus. Afin d'assurer une compatibilité avec les aliments qui seront cuits dans la casserole, au moins la paroi intérieure de celle-ci est émaillée. Le fond de la casserole sert alors d'élément chauffant.

A titre de premier exemple, un récipient culinaire expérimental à fond plat ayant une paroi latérale légèrement évasée vers le haut est réalisé par emboutissage d'un flan ayant une épaisseur de 1 mm, en alliage ferromagnétique dont la composition chimique comprend environ 70,3 % de Ni, 14,2 % de Cu, 3,2 % de Cr, 0,55 % de Mn, 0,21 % de Si, le reste étant du fer et des impuretés résultant de l'élaboration. Le fond du récipient a un diamètre de 230 mm, et la paroi latérale une hauteur de 100 mm. La température de Curie de l'alliage est voisine de 300 °C et son coefficient de magnétostriction est, en valeur absolue, compris entre 1 x $10^{-6}$ et 2 x $10^{-6}$. Ce récipient ayant un but purement expérimental, n'est pas émaillé.

Lorsque le récipient vide est chauffé sur une plaque de chauffage par induction d'une cuisinière du commerce, la température du fond a atteint une température maximale de 240 °C, ce qui montre que le récipient ne serait pas gravement détérioré dans le cas où il serait oublié accidentellement sur le dispositif de chauffage.

Lorsque le récipient est partiellement rempli d'huile de tournesol pour usage alimentaire et chauffé par induction comme dans le cas précédent, la température de l'huile monte jusqu'à 190 °C environ, et la montée en température se fait un peu plus vite que par un chauffage réalisé à l'aide d'un gros brûleur à gaz d'une cuisinière à gaz du commerce.

Dans les deux cas, le chauffage par induction se fait sans bruit.

A titre de deuxième exemple, on réalise un récipient culinaire expérimental identique à celui de l'exemple précédent, mais dans lequel la composition de l'alliage ferromagnétique comprend 80,5 % de Ni, 0,5 % de Cu, 8,3 % de Mo, 0,45 % de Mn, 0,1 % de Si, le reste étant du fer et des impuretés résultant de l'élaboration. Cet alliage a une température de Curie et un coefficient de magnétostriction très voisins de ceux de l'alliage de l'exemple précédent. Les essais réalisés dans les mêmes conditions donne des résultats identiques. En particulier le chauffage par induction se fait sans bruit.

Dans un autre mode de réalisation, la casserole est essentiellement en acier inoxydable austénitique, par exemple du type 18 % de chrome et 8 % de nickel, et comporte un fond multicouche constitué d'une couche d'aluminium destinée à répartir la chaleur et une couche en alliage ferromagnétique d'épaisseur comprise entre 0,6 et 1 mm, ayant une température de Curie comprise entre 150 °C et 370 °C et un coefficient de magnétostriction $\lambda_s$ 5x$10^{-6}$ en valeur absolue, et de préférence, une température de Curie comprise entre 275°C et 340°C, et par exemple inférieure à 325°C, et un coefficient de magnétostriction $\lambda_s$ inférieur ou égal à 3x$10^{-6}$ en valeur absolue. L'alliage ferromagnétique constituant l'élément chauffant de la casserole est par exemple un alliage tel que défini ci-dessus.

Dans une variante, la couche d'alliage est enserrée entre deux couches d'acier inoxydable austénitique, ou peut même être directement soudée sur l'acier inoxydable austénitique dont est essentiellement constituée la casserole.

Dans un troisième mode de réalisation, le récipient culinaire est une poêle constituée essentiellement d'un alliage d'aluminium, dont la surface destinée à être au contact des aliments peut être revêtue d'une matière antiadhésive. Une grille en alliage ferromagnétique conforme à l'invention, et constituant l'élément chauffant, est insérée dans le fond de la poêle.

D'autres modes de réalisation peuvent être imaginés, pourvu qu'ils utilisent un élément chauffant en alliage ferromagnétique ayant une température de Curie comprise entre 150°C et 370°C, et de préférence entre 275°C et 340°C, et un coefficient de magnétostriction $\lambda_s \leq 5\times10^{-6}$ en valeur absolue, et de préférence, $\lambda_s \leq 3\times10^{-6}$.

**Revendications**

1. Récipient culinaire destiné à être chauffé par induction comportant une partie chauffante en alliage ferromagnétique **caractérisé en ce que** ledit alliage ferromagnétique a une température de Curie comprise entre 150°C et 370°C et un coefficient de magnétostriction $\lambda_s \leq 5 \times 10^{-6}$ en valeur absolue.

2. Récipient culinaire selon la revendication 1 **caractérisé en ce que** la température de Curie est inférieure à 350°C.

3. Récipient culinaire selon la revendication 1 ou la revendication 2 **caractérisé en ce que** l'alliage ferromagnétique dont est constituée la partie chauffante a une température de Curie comprise entre 275°C et 340°C et un coefficient de magnétostriction $\lambda_s \leq 3 \times 10^{-6}$ en valeur absolue.

4. Récipient culinaire selon la revendication 3 **caractérisé en ce que** la température de Curie est inférieure à 325°C.

5. Récipient culinaire selon l'une quelconque des revendications 1 à 4 **caractérisé en ce que** l'alliage ferromagnétique dont est constituée la partie chauffante est un alliage du type FeNiCuX, X étant un ou plusieurs éléments pris parmi Cr, Mo, Mn, Si, Al, W, Nb, V et Ti, la composition chimique de l'alliage (en % en poids) étant telle que :

$$50\ \% \leq Ni \leq 85\ \%$$

$$0\ \% \leq Cu \leq 50\ \%$$

$$0\ \% \leq X \leq 12\ \%$$

$$(35/25) \times (75 - Ni) \leq Cu \leq (50/35) \times (85 - Ni)$$

$$(7/20) \times (Ni - 65) \leq X \leq (12/35) \times (Ni - 50)$$

avec :

$$X = Cr + Mo + Mn + Si + Al + W + Nb + V + Ti,$$

le reste étant du fer et des impuretés résultant de l'élaboration.

6. Récipient culinaire selon la revendication 5 **caractérisé en ce que** la composition chimique de l'alliage dont est constituée la partie chauffante est telle que :

$$55\ \% \leq Ni \leq 65\ \%$$

$$22\ \% \leq Cu \leq 36\ \%$$

$$0\% \leq X \leq 3\%$$

7. Récipient culinaire selon la revendication 6 **caractérisé en ce que** la teneur en cuivre est comprise entre 25% et 35%.

8. Récipient culinaire selon l'une quelconque des revendications 1 à 7 **caractérisé en ce que** la partie chauffante est constituée d'un insert incorporé au fond du récipient.

9. Récipient culinaire selon la revendication 8 **caractérisé en ce que** l'insert est une plaque.

10. Récipient culinaire selon l'une quelconque des revendications 1 à 7 **caractérisé en ce que** la partie chauffante constitue la paroi du récipient.

11. Alliage ferromagnétique du type FeNiCuX, X étant un ou plusieurs éléments pris parmi Cr, Mo, Mn, Si, Al, W, Nb, V et Ti, pour la fabrication d'un récipient culinaire selon l'une quelconque des revendications 1 à 10, la composition chimique de l'alliage (en % en poids) étant telle que :

$$50\ \% \leq Ni \leq 85\ \%$$

$$0\ \% \leq Cu \leq 50\%$$

$$0\ \% \leq X \leq 12\%$$

$$(35/25) \times (75 - Ni) \leq Cu \leq (50/35) \times (85 - Ni)$$

$$(7/20) \times (Ni - 65) \leq X \leq (12/35) \times (Ni - 50)$$

avec :

$$X = Cr + Mo + Mn + Si + Al + W + Nb + V + Ti,$$

le reste étant du fer et des impuretés résultant de l'élaboration, l'alliage ayant une température de Curie comprise entre 150 °C et 370 °C et un coefficient de magnétostriction $\lambda_s \leq 5 \times 10^{-6}$ en valeur absolue.

12. Alliage ferromagnétique selon la revendication 11 **caractérisé en ce que** sa température de Curie est inférieure à 350°C.

**13.** Alliage ferromagnétique selon la revendication 11 ou la revendication 12 **caractérisé en ce que** sa composition chimique est telle que :

$$55\ \% \leq Ni \leq 65\%$$

$$22\ \% \leq Cu \leq 36\ \%$$

$$0\% \leq X \leq 3\%$$

**14.** Alliage ferromagnétique selon la revendication 13 **caractérisé en ce que** la teneur en cuivre est comprise entre 25% et 35%.

**15.** Alliage ferromagnétique selon l'une quelconque des revendications 11 à 14 **caractérisé en ce qu'**il a une température de Curie comprise entre 275°C et 340°C et un coefficient de magnétostriction $\lambda_s \leq$ 3x10$^{-6}$ en valeur absolue.

**16.** Alliage ferromagnétique selon la revendication 15 **caractérisé en ce que** sa température de Curie est inférieure à 325°C.

**Claims**

**1.** Cooking vessel intended to be induction heated, comprising a heating part made of a ferromagnetic alloy, **characterized in that** the said ferromagnetic alloy has a Curie temperature of between 150°C and 370°C and a magnetostriction coefficient $\lambda_s \leq$ $5 \times 10^{-6}$ in absolute value.

**2.** Cooking vessel according to Claim 1, **characterized in that** the Curie temperature is less than 350°C.

**3.** Cooking vessel according to Claim 1 or Claim 2, **characterized in that** the ferromagnetic alloy of which the heating part is composed has a Curie temperature of between 275°C and 340°C and a magnetostriction coefficient $\lambda_s \leq 3 \times 10^{-6}$ in absolute value.

**4.** Cooking vessel according to Claim 3, **characterized in that** the Curie temperature is less than 325°C.

**5.** Cooking vessel according to any one of Claims 1 to 4, **characterized in that** the ferromagnetic alloy of which the heating part is composed is an alloy of the FeNiCuX type, X being one or more elements taken from Cr, Mo, Mn, Si, Al, W, Nb, V and Ti, the chemical composition of the alloy (in % by weight)

being such that:

$$50\% \leq Ni \leq 85\%$$

$$0\% \leq Cu \leq 50\%$$

$$0\% \leq X \leq 12\%$$

$$(35/25) \times (75 - Ni) \leq Cu \leq (50/35) \times (85 - Ni)$$

$$(7/20) \times (Ni - 65) \leq X \leq (12/35) \times (Ni - 50)$$

with:

$$X = Cr + Mo + Mn + Si + Al + W + Nb + V + Ti,$$

the balance being iron and impurities resulting from smelting.

**6.** Cooking vessel according to Claim 5, **characterized in that** the chemical composition of the alloy of which the heating part is composed is such that:

$$55\% \leq Ni \leq 65\%$$

$$22\% \leq Cu \leq 36\%$$

$$0\% \leq X \leq 3\%.$$

**7.** Cooking vessel according to Claim 6, **characterized in that** the copper content is between 25% and 35%.

**8.** Cooking vessel according to any one of Claims 1 to 7, **characterized in that** the heating part is composed of an insert incorporated into the bottom of the vessel.

**9.** Cooking vessel according to Claim 8, **characterized in that** the insert is a plate.

**10.** Cooking vessel according to any one of Claims 1 to 7, **characterized in that** the heating part constitutes the wall of the vessel.

**11.** Ferromagnetic alloy of the FeNiCuX type, X being one or more elements taken from Cr, Mo, Mn, Si, Al, W, Nb, V and Ti, for the manufacture of a cooking vessel according to any one of Claims 1 to 10, the chemical composition of the alloy (in % by weight) being such that:

$$50\% \leq Ni \leq 85\%$$

$$0\% \leq Cu \leq 50\%$$

$$0\% \leq X \leq 12\%$$

$$(35/25) \times (75 - Ni) \leq Cu \leq (50/35) \times (85 - Ni)$$

$$(7/20) \times (Ni - 65) \leq X \leq (12/35) \times (Ni - 50)$$

with:

$$X = Cr + Mo + Mn + Si + Al + W + Nb + V + Ti,$$

the balance being iron and impurities resulting from smelting, the alloy having a Curie temperature of between 150°C and 370°C and a magnetostriction coefficient $\lambda_s \leq 5 \times 10^{-6}$ in absolute value.

12. Ferromagnetic alloy according to Claim 11, **characterized in that** its Curie temperature is less than 350°C.

13. Ferromagnetic alloy according to Claim 11 or Claim 12, **characterized in that** its chemical composition is such that:

$$55\% \leq Ni \leq 65\%$$

$$22\% \leq Cu \leq 36\%$$

$$0\% \leq X \leq 3\%.$$

14. Ferromagnetic alloy according to Claim 13, **characterized in that** the copper content is between 25% and 35%.

15. Ferromagnetic alloy according to any one of Claims 11 to 14, **characterized in that** it has a Curie temperature of between 275°C and 340°C and a magnetostriction coefficient $\lambda_s \leq 3 \times 10^{-6}$ in absolute value.

16. Ferromagnetic alloy according to Claim 15, **characterized in that** its Curie temperature is less than 325°C.

**Patentansprüche**

1. Kochgeschirr, das durch Induktion geheizt werden soll und das einen Heizbereich aus einer ferromagnetischen Legierung aufweist, **dadurch gekennzeichnet, dass** die ferromagnetische Legierung eine Curie-Temperatur im Bereich von 150 bis 370 °C und einen Absolutwert des Koeffizienten der Magnetostriktion $\lambda_s \leq 5 \times 10^{-6}$ aufweist.

2. Kochgeschirr nach Anspruch 1, **dadurch gekennzeichnet, dass** die Curie-Temperatur unter 350 °C liegt.

3. Kochgeschirr nach Anspruch 1 oder Anspruch 2, **dadurch gekennzeichnet, dass** die ferromagnetische Legierung, aus der der Heizbereich besteht, eine Curie-Temperatur im Bereich von 275 bis 340 °C und einen Absolutwert des Koeffizienten der Magnetostriktion $\lambda_s \leq 5 \times 10^{-6}$ besitzt.

4. Kochgeschirr nach Anspruch 3, **dadurch gekennzeichnet, dass** die Curie-Temperatur unter 325 °C liegt.

5. Kochgeschirr nach einem der Ansprüche 1 bis 4, **dadurch gekennzeichnet, dass** die ferromagnetische Legierung, aus der der Heizbereich besteht, eine Legierung vom Typ FeNiCuX ist, wobei X ein Element oder mehrere Elemente bedeutet, die unter Cr, Mo, Mn, Si, Al, W, Nb, V und Ti ausgewählt sind, wobei die chemische Zusammensetzung der Legierung (in Gew.-%) so ist, dass gilt:

$$50 \% \leq Ni \leq 85 \%$$

$$0 \% \leq Cu \leq 50 \%$$

$$0 \% \leq X \leq 12 \%$$

$$(35/25) \times (75 - Ni) \leq Cu \leq (50/35) \times (85 - Ni)$$

$$(7/20) \times (Ni - 65) \leq X \leq (12/35) \times (Ni - 50)$$

mit $X = Cr + Mo + Mn + Si + Al + W + Nb + V + Ti$, wobei der Rest aus Eisen und aus der Verarbeitung stammenden Verunreinigungen besteht.

6. Kochgeschirr nach Anspruch 5, **dadurch gekennzeichnet, dass** die chemische Zusammensetzung der Legierung, aus der der Heizbereich besteht, so ist, dass gilt:

$$55\ \% \le Ni \le 65\ \%$$

$$22\ \% \le Cu \le 36\ \%$$

$$0\ \% \le X \le 3\ \%.$$

7. Kochgeschirr nach Anspruch 6, **dadurch gekennzeichnet, dass** der Kupfergehalt im Bereich von 25 bis 35 % liegt.

8. Kochgeschirr nach einem der Ansprüche 1 bis 7, **dadurch gekennzeichnet, dass** der Heizbereich aus einem Einsatz besteht, der in den Boden des Geschirrs eingebracht ist.

9. Kochgeschirr nach Anspruch 8, **dadurch gekennzeichnet, dass** es sich bei dem Einsatz um eine Platte handelt.

10. Kochgeschirr nach einem der Ansprüche 1 bis 7, **dadurch gekennzeichnet, dass** der Heizbereich die Wand des Geschirrs bildet.

11. Ferromagnetische Legierung vom Typ FeNiCuX, wobei X ein Element oder mehrere Elemente bedeutet, die unter Cr, Mo, Mn, Si, Al, W, Nb, V und Ti ausgewählt sind, zur Herstellung eines Kochgeschirrs nach einem der Ansprüche 1 bis 10, wobei die chemische Zusammensetzung der Legierung (in Gew.-%) so ist, das gilt:

$$50\ \% \le Ni \le 85\ \%$$

$$0\ \% \le Cu \le 50\ \%$$

$$0\ \% \le X \le 12\ \%$$

$$(35/25)\ x\ (75 - Ni) \le Cu \le (50/35)\ x\ (85 - Ni)$$

$$(7/20)\ x\ (Ni - 65) \le X \le (12/35)\ x\ (Ni - 50)$$

mit X = Cr + Mo + Mn + Si + Al + W + Nb + V + Ti, wobei der Rest aus Eisen und aus der Verarbeitung stammenden Verunreinigungen besteht, wobei die Legierung eine Curie-Temperatur im Bereich von 150 bis 370 °C und einen Absolutwert des Koeffizienten der Magnetostriktion $\lambda_s \le 5\ x\ 10^{-6}$ aufweist.

12. Ferromagnetische Legierung nach Anspruch 11, **dadurch gekennzeichnet, dass** ihre Curie-Temperatur unter 350 °C liegt.

13. Ferromagnetische Legierung nach Anspruch 11 oder Anspruch 12, **dadurch gekennzeichnet, dass** ihre chemische Zusammensetzung so ist, dass gilt:

$$55\ \% \le Ni \le 65\ \%$$

$$22\ \% \le Cu \le 36\ \%$$

$$0\ \% \le X \le 3\ \%.$$

14. Ferromagnetische Legierung nach Anspruch 13, **dadurch gekennzeichnet, dass** der Kupfergehalt im Bereich von 25 bis 35 % liegt.

15. Ferromagnetische Legierung nach einem der Ansprüche 11 bis 14, **dadurch gekennzeichnet, dass** sie eine Curie-Temperatur im Bereich von 275 bis 340 °C und einen Absolutwert des Koeffizienten der Magnetostriktion $\lambda_s \le 5\ x\ 10^{-6}$ aufweist.

16. Ferromagnetische Legierung nach Anspruch 15, **dadurch gekennzeichnet, dass** ihre Curie-Temperatur unter 325 °C liegt.